# EUROPEAN PATENT SPECIFICATION

(11) **EP 0 453 016 B1**
(45) Date of publication and mention of the grant of the patent: **31.05.1995**
(21) Application number: 91200744.0
(22) Date of filing: 29.03.1991
(51) Int. Cl.: B60T 8/32

(54) **Method of limiting braking pressure on a vehicle brake**
Verfahren zur Bremsdruckbegrenzung in einer Kraftfahrzeugbremse
Méthode pour limiter la pression de freinage dans un frein de véhicule

(30) Priority: 16.04.1990 US 509700
(43) Date of publication of application: 23.10.1991
(73) Proprietor: GENERAL MOTORS CORPORATION, Detroit Michigan 48202 (US)
(72) Inventor: Leppek, Kevin Gerard, Troy, Michigan 48098 (US); Hogan, Martin Andrew, Northville, Michigan 48167 (US)
(74) Representative: Denton, Michael John

(56) References cited:
- WO-A-87/05872
- DE-A- 3 715 103
- FR-A- 2 619 347
- GB-A- 2 011 564
- US-A- 4 824 184

## Description

This invention relates to a method of limiting the braking pressure applied to the brake of a vehicle wheel.

When the brakes of a vehicle are applied, a tyre torque is generated between the wheel and the road surface which is dependent upon a variety of parameters including the road surface conditions and the amount of slip present between the wheel and the road surface. This tyre torque increases as slip increases, until a critical value of slip is reached, beyond which the tyre torque decreases and the wheel rapidly approaches lock-up. Therefore, to achieve stable braking, an anti-lock control system seeks to control wheel slip at or near the critical slip value. An anti-lock control system achieves this by detecting the onset of wheel lock, or in other words, an incipient lock condition. Upon detecting an incipient lock condition, the anti-lock control system releases pressure at the wheel brake. Once the wheel recovers from the incipient lock condition, brake pressure can be re-established. An incipient lock condition is typically represented by the magnitude of wheel deceleration exceeding a deceleration threshold value or slip exceeding a slip threshold value.

However, certain characteristics of the vehicle suspension and/or the road surface can cause the wheel to exhibit behavior as if it is approaching an incipient lock when in reality it is not. For example, on deformable road surfaces, the tyre torque/wheel slip relationship does not follow the relationship previously described (where, beyond the critical point, tyre torque decreases with increasing slip) but instead follows the relationship in which the tyre torque continuously increases with increasing slip. On this form of surface, limiting wheel slip at the slip threshold value by releasing braking pressure when wheel slip exceeds the slip threshold results in the tyre torque being less than the maximum achievable for the surface. In these cases, the anti-lock system takes corrective action (causing a release of braking pressure) based upon the prediction that an incipient lock condition will soon occur when in fact it will not. As a result, pressure is relieved when it is not truly necessary to do so. This release of pressure will then typically cause the wheel to appear to recover suddenly. However, this exhibited recovery is short-lived, as the re-application of pressure usually results in the anti-lock system detecting incorrectly an incipient lock condition and release braking pressure in response thereto. Thus, wheel recovery following a sensed incipient lock when an incipient lock condition does not in fact exist occurs much sooner than it would following a true incipient lock condition. Similarly, the detection of an incipient lock condition following a recovery from a detected incipient lock when such a condition does not in fact exist, also occurs much sooner than it would under normal conditions. This results in a rapid cyclic behavior of the anti-lock system and causes an overall decrease in braking effectiveness.

Another disadvantage of allowing an anti-lock control system to exhibit such a cyclic control action is that an overall decrease in actual tyre torque can occur. This is due to the fact that anti-lock systems typically release braking pressure at a higher rate than they re-apply the pressure. However, when the system is rapidly applying and releasing pressure, such as during braking on a deformable surface, the net effect is that the system releases more pressure than it re-applies due to the unusually shortened cyclic period, causing the overall braking pressure to decrease resulting in a decrease in the tyre torque available to stop the vehicle.

US-A-4,807,133 discloses an anti-skid control system which reduces braking presure when wheel slip is detected (when the wheel speed becomes equal to a reference wheel speed) so as to cause wheel speed to oscillate between high and low speed peaks during repeated decays and increases in brake pressure and includes the features of measuring the time between successive high speed peaks and the difference in wheel speed at a low peak and the wheel speed at the successive high peak. When the time between high speed peaks is less than a threshold time and the speed difference is greater than a threshold speed difference, the system reduces the reference wheel speed such that the difference between a high wheel speed peak and the reference wheel speed is greater, thereby delaying the onset of a release in brake pressure.

US-A-4,929,034 discloses an anti-skid control system in which brake pressure is released when wheel deceleration or slippage is greater than an associated variable threshold. When the wheel deceleration exceeds a predetermined value a numerical value is input to a down counter. The count in the down counter is used to increase the deceleration and slippage threshold levels. A pulsed signal causes the counter to count down, thereby progressively reducing the deceleration and slippage thresholds back to their normal levels.

The present invention seeks to provide an improved method of limiting the braking pressure applied to the brake of a vehicle wheel.

Accordingly, an aspect of the present invention provides a method of limiting braking pressure as defined in claim 1.

The present invention can provide for an improved anti-lock control system for a braked wheel that prevents rapid cycling of braking pressure in response to vehicle and/or road surface conditions which cause the wheel to exhibit behavior normally sensed by the system as representing the wheel approaching an incipient lock condition when in reality it is not.

Preferably, the method provides for adapting the parameters it uses so as to achieve normal braking pressure cycling under all braking conditions.

Advantageously, the conditions for sensing an incipient wheel lock-up condition may be made more stringent when excessively rapid cycling of the braking pressure is sensed, so as to re-establish a normal braking pressure cycling.

A release threshold representing an incipient wheel lock-up condition may be provided and is preferably adaptively adjusted in response to a sensed excessively rapid cycling of the braking pressure until a normal braking pressure cycle time is established; and in addition, the rate of pressure re-application may be increased in response to the sensed excessively rapid cycling of the braking pressure.

In a preferred embodiment, when wheel parameters (which may include wheel slip) represent an incipient wheel lock-up condition normally calling for a release of braking pressure during a pressure apply mode of the anti-lock braking cycle (preferably including at least a pressure apply mode during which tyre torque is increased and a pressure release mode during which tyre torque is reduced) and the duration of the pressure apply mode is less than a predetermined threshold (which may be a condition representing abnormal rapid cycling of the braking pressure as a result of, for example, braking on a deformable surface), the wheel slip threshold representing an incipient wheel lock-up condition is incremented, the rate of increase in braking pressure during the braking pressure apply mode is set to a high level and the pressure apply mode is continued during which the tyre torque is ramped at the increased rate. In this embodiment, these steps are repeated while the wheel parameters represent an incipient wheel lock-up condition normally calling for a release of braking pressure until the time of the pressure apply mode equals the predetermined threshold representing a normal braking pressure cycling period. At this time, the rate of pressure increase during the apply mode is returned to normal and the system is set to a release mode wherein the braking pressure is released. The slip threshold adjusted as set forth above is left unchanged in this embodiment; and when the wheel parameters indicate recovery from the incipient wheel lock-up condition the pressure apply mode is again initiated to re-apply braking pressure.

Through the adjustment of the slip threshold as described above, the cycle period of the anti-lock braking cycle is preferably returned to normal. If at any time the wheel slip exceeds a predetermined high slip limit (as will occur, for example, when the road surface returns to a non-deformable surface), the slip threshold representing an incipient wheel lock-up condition and the rate of pressure increase are advantageously returned to their initial calibration values after which the system is preferably set to a release mode wherein the brake pressure is released.

The present invention also extends to apparatus for carrying out the claimed method.

According to an aspect of the present invention there is provided brake pressure limiting apparatus as specified in claim 13.

According to another aspect of the present invention, there is provided brake pressure limiting apparatus as specified in claim 14.

An embodiment of the present invention is described below, by way of example only, with reference to the accompanying drawings, in which:
Figure 1 is a diagram of an embodiment of anti-lock control system;
Figures 2 and 3 are flow charts depicting the operation of the system of Figure 1; and
Figure 4 is a diagram illustrating the adaptive release threshold provided by the operation of the system of Figure 1.

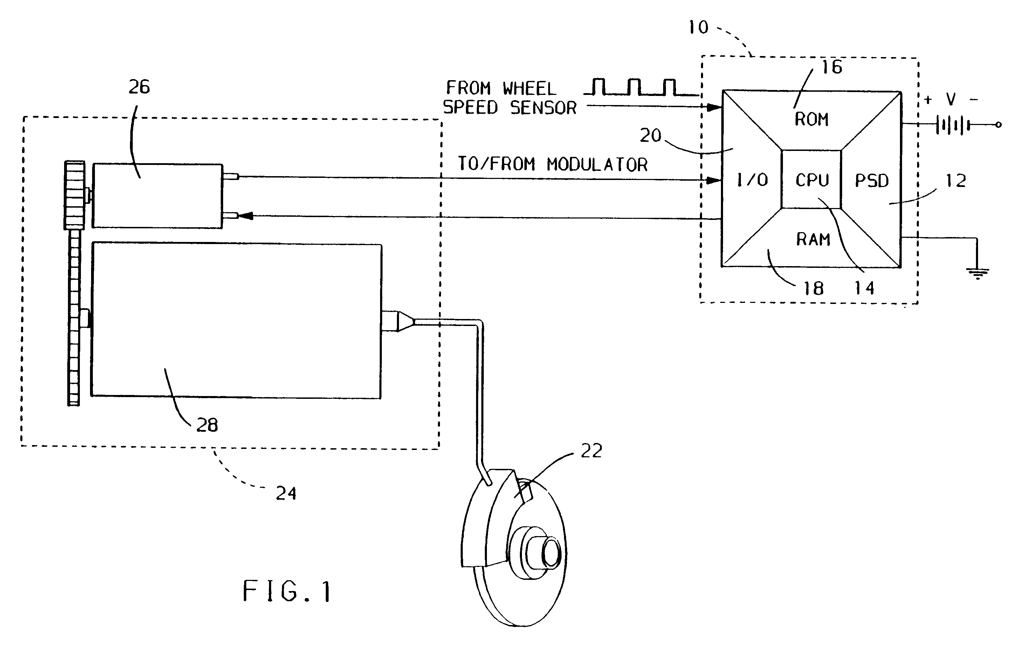

An overview of an embodiment of anti-lock braking system is shown in Figure 1. The controller 10 shown consists of a conventional digital computer which includes a power supply device (PSD) 12 which interfaces the controller to the vehicle power system, a central processing unit (CPU) 14 which executes instructions and processes information, read-only memory (ROM) 16 in which the instructions necessary to perform the control steps are stored, random-access memory (RAM) 18 which is used for storing variables and computational parameters, and an input/output circuit (I/O) 20 which interfaces external control signals to the digital computer. The computer 10 may, for example, take the form of the Motorola Single Chip Microcomputer MC68HCll.

The input/output circuit 20 receives information from devices such as standard wheel speed sensors and the modulator 24, and also acts to send information to the modulator 24 and other external devices.

The modulator 24, in this embodiment consisting of a linear motor 26 and piston actuator 28, is connected to the wheel brake 22. Thus, the anti-lock control system comprises a controller 10, which, through the execution of the instructions encoded in ROM 16, obtains external information from the input/output circuit 20 and sends commands to the modulator 24 to vary the pressure at the wheel brake 22.

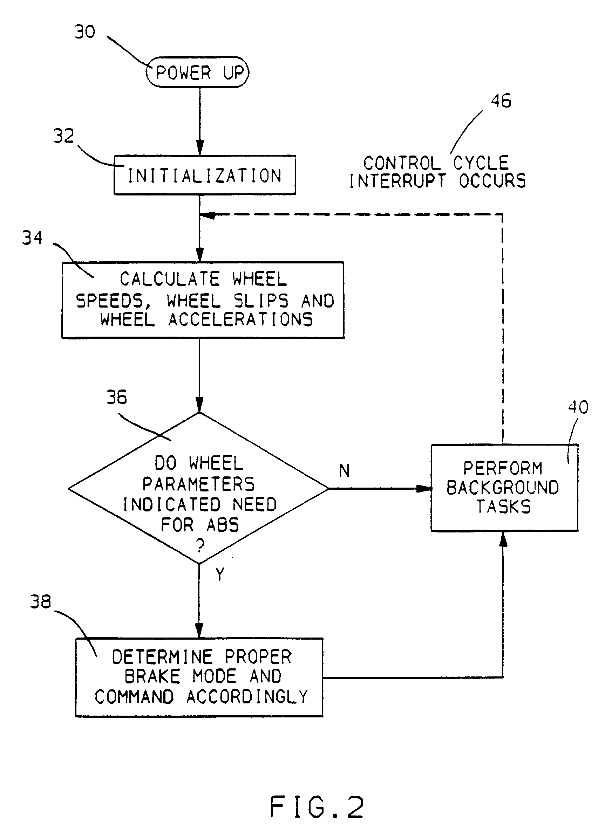

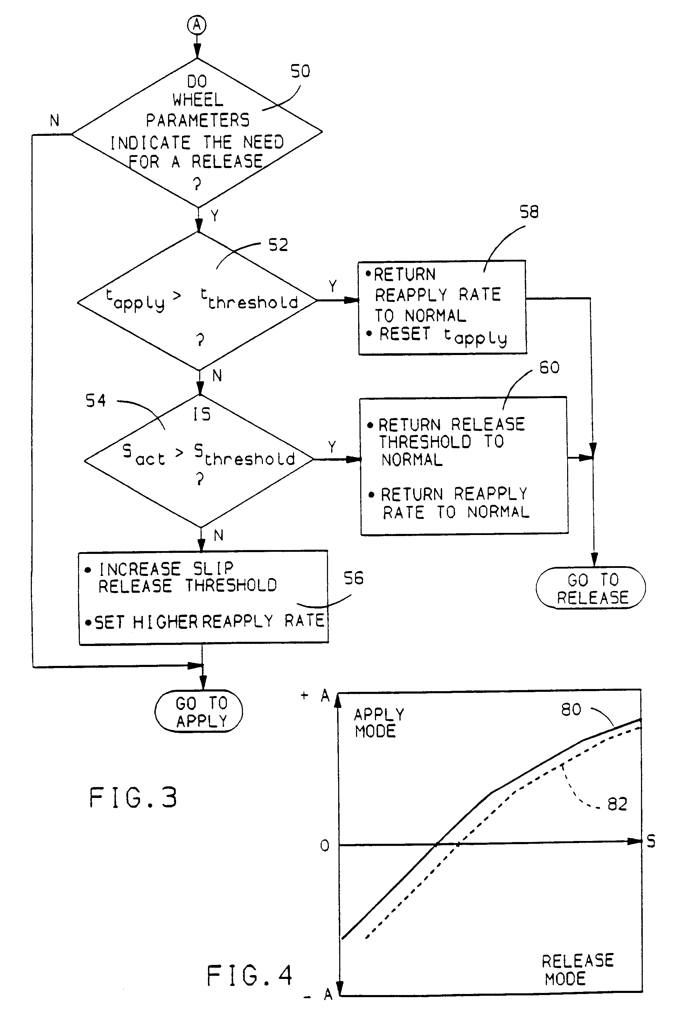

The algorithm of this embodiment is shown in detail in Figures 2 and 3. It should be briefly noted that, in describing the algorithm, references will be made to general tasks depicted in the flow chart function blocks of Figures 2 and 3.

The basic anti-lock control algorithm is shown in Figure 2. When the controller is powered up 30, using the vehicle ignition or other convenient means, the digital computer begins executing the instructions encoded in the ROM 16. The first task after power up 30 is initialization 32. Initialization 32, as will be apparent, includes setting various RAM 18 variables to calibrated values, stabilizing voltage levels at the input/output circuit 20 and confirming that the external circuits are operative.

Once initialization 32 is complete, the computer begins the control cycle tasks, each control cycle lasting for example 5 msec. The first basic task of the control cycle is to obtain wheel speed information from the wheel speed sensors (not shown) and to calculate wheel speed, acceleration and slip 34.

Then, the computer determines whether anti-lock brake pressure modulation is required on the basis of the calculated values of wheel acceleration and slip 36. If anti-lock control is needed, the digital computer determines the appropriate proper brake pressure mode and commands the modulator to adjust the tyre torque accordingly 38.

Once this is done, or if anti-lock control is not needed, the computer proceeds to perform the background tasks 40. The background tasks 40 include functions such as performing system self-check diagnostic tests and communicating with off-board devices (such as service tools and other vehicle computers).

The control cycle tasks are executed once every control cycle. Thus, when a control cycle interrupt occurs 46, a new control cycle begins and the computer executes blocks 34 to 40 again.

A typical anti-lock braking cycle performed via repeated executions of the foregoing steps 34,36,38 is as follows. When the calculated wheel slip and acceleration are indicative of an incipient wheel lock-up condition, a pressure release mode is actuated to release braking pressure quickly so as to allow the wheel to recover from the incipient wheel lock-up condition. Once the calculated wheel acceleration and slip indicate that the wheel has recovered, an apply mode is actuated and braking pressure is re-applied. In this embodiment, braking pressure is re-applied only to a significant fraction of the braking pressure at the time pressure was released, and thereafter is increased incrementally in ramp fashion at a predetermined rate of increase until another incipient wheel lock-up condition is sensed, at which time the release mode is actuated and the cycle is repeated.

As previously indicated, certain characteristics of the vehicle suspension and/or the road surface may result in the above anti-lock braking cycles occurring at an excessively high rate, resulting in an overall decrease in braking effectiveness. In one embodiment, this rate is determined to be excessively high when the frequency of the anti-lock braking cycles is greater than a frequency threshold level, representative of a normal anti-lock braking cycle.

Figure 3 illustrates another embodiment of the portion of step 38 of the control cycle of Figure 2 that senses this excessively high rate of anti-lock braking cycles, re-establishes a normal rate of anti-lock braking and prevents an overall decrease in braking pressure during the period of anti-lock braking on the basis of a measure of the time during which braking pressure is applied in each anti-lock braking cycle.

Prior to entry into the portion of the routine illustrated in Figure 3, the computer determines the appropriate braking mode based upon the values of wheel acceleration and wheel slip. If these parameters do not call for a release in braking pressure, that is step 38 is indicating an apply mode 50, the computer simply exits this portion of the routine of step 38 and continues with the other control cycle tasks associated with the apply mode, including the incremental increasing in ramp fashion of the braking pressure after a previous release mode.

However, if the calculated wheel acceleration and slip call for a release in braking pressure, then the computer determines if the duration of the most recent apply mode was less than a time t_{threshold} representative of a normal cycle period 52. A period less than t_{threshold} represents an excessive rate of anti-lock braking cycles. As previously indicated, this excessive rate in response to the wheel acceleration and slip may be typical of a situation where the vehicle is braking on a deformable surface.

In this embodiment, the calibration time t_{threshold} represents a minimum brake application period below which the anti-lock system is unable to re-apply as much pressure as it releases at the normal pressure re-application rate. Thus, if the actual brake application time t_{apply} is less than t_{threshold}, the cycle frequency is above acceptable limits and it is likely that overall braking pressure is decreasing.

The computer next determines whether the measured wheel slip, S_{act}, is greater than a maximum allowable slip threshold S_{threshold} 54. This slip threshold is equal to a value of slip, such as 30%, above which a decrease in braking pressure is desirable under normal conditions even with low values of wheel acceleration.

Assuming that the wheel slip is not greater than the maximum allowable, the computer increases the slip threshold for detecting an incipient wheel lock-up condition and increases the re-apply rate of the braking pressure 56, that is increases the rate of increase in braking pressure. The increase in the slip threshold makes the conditions for sensing an incipient lock-up more stringent, which has the effect of increasing the apply/release cycle time. The increase in the re-apply rate is in this embodiment achieved by increasing the gradient of the ramp, and thereby prevents a decrease in overall braking pressure due to the high cycle rates.

Following step 56, the computer continues with the other tasks associated with the apply mode including the incremental increasing of the braking pressure at the higher rate established at step 56, and the timing of the apply mode.

As long as t_{apply} of the apply mode is less than t_{threshold} and the wheel slip s_{act} remains less than S_{threshold}, the slip threshold for detecting an incipient wheel lock-up condition is repeatedly increased at step 56 at the interrupt interval.

The result of the foregoing is illustrated in Figure 4 which depicts the conditions for establishing the apply and release modes. As viewed in this Figure, curve 80 illustrates the normal boundary between the apply and release modes as a function of wheel acceleration A and wheel slip S. Conditions defining a point on one side of the boundary represent an incipient wheel lock-up condition (lower half of the graph) and on the other side a recovered condition (upper half of the graph). The increase in the slip threshold established at step 56 effectively shifts the boundary to, for example, dashed curve 82 to make the conditions representing an incipient wheel lock-up condition, calling for release of braking pressure, more stringent. In one embodiment, the boundary conditions of Figure 4 are implemented via a look-up table in the read-only memory 16 accessed on the basis of the obtained values of wheel acceleration and slip. The increase in the release threshold affecting the shift in the boundary is accomplished at 56 by decreasing the actual wheel slip value computed at 34 for use in accessing the look-up table. The result of this shift is that a larger actual wheel slip is required to establish the conditions representing an incipient wheel lock-up, calling for a release of the braking pressure.

When the calculated values of wheel acceleration and slip represent an incipient lock-up condition based upon the reduced slip value, and thereby the increased release threshold, established by 56, and step 52 determines that the time t_{apply} of the apply mode has become greater than the threshold value t_{threshold} representing a normal anti-lock braking cycle time, the re-apply rate is returned to normal and t_{apply} is reset 58. After this, the computer continues with the tasks associated with the release mode, including the release of braking pressure to allow recovery from the incipient lock-up condition. It will be noted that the adjusted slip threshold represented by the curve 82 of Figure 4 is retained. In this manner, the system adapts to the conditions giving rise to an excessive cycle rate to re-establish a normal anti-lock braking cycle rate.

When the conditions giving rise to an excessive cycle rate terminate, for example when the road surface changes from being deformable to being non-deformable, wheel slip will typically rapidly increase toward lock-up. When the slip exceeds the threshold value S_{threshold} over a pressure apply interval less than t_{threshold} 52,54, the release/apply threshold is returned to normal (curve 80 of Figure 4) and the re-apply rate is returned to normal 60; after which the computer continues with the other control tasks associated with the release mode. Thereafter, as long as the anti-lock braking cycle rate is determined to be normal 50,52, the normal apply/release boundary conditions are utilized 58.

In the foregoing manner, the system automatically responds to an excessive anti-lock braking rate and adapts its parameters to re-establish a normal cycle rate and automatically returns to the normal parameters when the conditions causing the excessive rate terminate.

The operation of the embodiment in which the frequency of the anti-lock braking cycles is used to determine whether they are occurring at an excessively high rate will be apparent to the skilled person from the above. In particular, the control cycle comprises the steps of (i) measuring a wheel parameter such as wheel slip S_{act} to obtain an indication of the onset of wheel lock; (ii) determining that the wheel is about to lock when the measured parameter exceeds a parameter threshold level such as the slip threshold S_{threshold}; (iii) reducing the braking pressure to suppress the onset of wheel lock, thereby allowing wheel recovery; (iv) re-applying braking pressure after wheel recovery until the measured parameter exceeds the parameter threshold level again; and repeating steps (i) to (iv) in cyclic manner. The frequency F_{act} at which steps (i) to (iv) are repeated is measured to determine whether the measured frequency F_{act} is above a frequency threshold F_{threshold} indicative of a normal anti-lock braking rate; and increasing the parameter threshold level S_{threshold} when the measured frequency F_{act} exceeds the frequency threshold F_{threshold}.

In this embodiment, the step of increasing the parameter threshold level S_{threshold} is repeated until the parameter threshold level S_{threshold} has been increased to a level at which the measured frequency F_{act} no longer exceeds the frequency threshold F_{threshold}. Additionally, the braking pressure is increased at an initial rate of increase until the measured parameter S_{act} exceeds the parameter threshold level S_{threshold}, so that the braking pressure is re-applied in ramp fashion. The rate of increase in braking pressure is increased so as to enable the full braking pressure to be reached rapidly so as to prevent loss of braking power at high rates of anti-lock braking. When the measured frequency F_{act} no longer exceeds the frequency threshold F_{threshold}, the rate of increase in braking pressure is reset to the initial rate to return to normal braking.

## Claims

1. A method of limiting the braking pressure applied to the brake of a vehicle wheel while travelling over a road surface comprising the steps of (i) measuring a wheel parameter (S_{act}) indicative of the onset of wheel lock; (ii) determining that the wheel is about to lock when the measured parameter exceeds a parameter threshold level (S_{threshold}); (iii) reducing the braking pressure to suppress the onset of wheel lock, thereby allowing wheel recovery; (iv) re-applying braking pressure after wheel recovery until the measured parameter exceeds the parameter threshold level again; repeating steps (i) to (iv) in cyclic manner; measuring the frequency (F_{act}) at which steps (i) to (iv) are repeated; determining whether the measured frequency is above a frequency threshold (F_{threshold}); and progressively increasing the parameter threshold level during the period when the measured frequency exceeds the frequency threshold.

2. A method according to claim 1, wherein the step of increasing the parameter threshold level includes the step of progressively increasing the parameter threshold level until it has been increased to a level at which the measured frequency no longer exceeds the frequency threshold.

3. A method according to claim 1 or 2, wherein the measured parameter is related to slip between the wheel and the road surface, the parameter threshold level being a slip threshold level.

4. A method according to any preceding claim, wherein the step of re-applying braking pressure comprises the step of increasing the braking pressure at a predetermined rate of increase until the measured parameter exceeds the parameter threshold level.

5. A method according to claim 4, comprisisng the step of increasing the rate of increase in braking pressure from the predetermined rate when the measured frequency exceeds the frequency threshold.

6. A method according to claim 5, comprisisng the step of resetting the rate of increase in braking pressure to the predetermined rate when the measured frequency no longer exceeds the frequency threshold.

7. A method of limiting the braking pressure applied to the brake of a vehicle wheel while travelling over a road surface comprising the steps of measuring the time (t_{apply}) during which braking pressure is applied to the wheel during the most recent pressure application operation; measuring a wheel parameter (S_{act}) indicative of the onset of wheel lock; determining that the wheel is about to lock when the measured parameter exceeds a parameter threshold level (S_{threshold}); increasing the parameter threshold level progressively from an initial level during the period when the measured parameter exceeds the parameter threshold level and the measured brake application time (t_{apply}) is less than a threshold time (t_{threshold}); applying braking pressure when the measured parameter is less than the parameter threshold level or when the measured parameter exceeds the parameter threshold level while the measured time is less than the threshold time; and releasing the braking pressure to suppress the onset of wheel lock when the measured parameter exceeds the parameter threshold level and the measured time is greater than the threshold time.

8. A method according to claim 7, comprising the step of resetting the parameter threshold level to an initial level when the measured parameter is greater than the parameter threshold level.

9. A method according to claim 7 or 8, wherein the step of applying braking pressure comprises the step of increasing the braking pressure at a predetermined rate of increase until the measured parameter exceeds the parameter threshold level.

10. A method according to claim 9, comprising the step of increasing the rate of increase in braking pressure from a predetermined rate when the measured parameter is less than the parameter threshold level and the measured time is less than the threshold time.

11. A method according to claim 10, comprising the step of resetting the rate of increase in braking pressure to the predetermined rate when the measured parameter exceeds the parameter threshold level or the measured time is greater than the threshold time.

12. A method according to any one of claims 7 to 11, wherein the measured parameter (S_{act}) is related to slip between the wheel and the road surface, the parameter threshold level being a slip threshold level.

13. Brake pressure limiting apparatus for limiting the braking pressure applied to the brake of a vehicle wheel while travelling over a road surface comprising measuring means (10) for measuring a wheel parameter (S_{act}) indicative of the onset of wheel lock; processing means (10) operative to determine that the wheel is about to lock when the measured parameter exceeds a parameter threshold level (S_{threshold}); and actuator means (24) responsive to the processing means and operative to reduce the braking pressure to suppress the onset of wheel lock, thereby allowing wheel recovery, to re-apply braking pressure after wheel recovery until the measured parameter exceeds the parameter threshold level again; the measuring means, the processing means and the actuating means being adapted to operate in cyclic manner; the processing means being operative to measure the frequency (F_{act}) of the cycles, to determine whether the measured frequency is above a frequency threshold (F_{threshold}) and to increase progressively the parameter threshold level during the period when the measured frequency exceeds the frequency threshold.

14. Brake pressure limiting apparatus for limiting the braking pressure applied to the brake of a vehicle wheel while travelling over a road surface comprising measuring means (10) for measuring the time (t_{apply}) during which braking pressure is applied to the wheel during the most recent pressure application operation and for measuring a wheel parameter (S_{act}) indicative of the onset of wheel lock; processing means (10) for determining that the wheel is about to lock when the measured parameter exceeds a parameter threshold level (S_{threshold}) and operative to increase the parameter threshold level progressively from an initial level during the period when the measured parameter exceeds the parameter threshold level and the measured brake application time (t_{apply}) is less than a threshold time (t_{threshold}); and actuator means (24) operative to apply braking pressure when the measured parameter is less than the parameter threshold level or when the measured parameter exceeds the parameter threshold level while the measured time is less than the threshold time and to release the braking pressure to suppress the onset of wheel lock when the measured parameter exceeds the parameter threshold level and the measured time is greater than the threshold time.

## Patentansprüche

1. Ein Verfahren zum Begrenzen des Bremsdruckes, der an die Bremse eines Fahrzeugrades angelegt wird, während es über eine Straßenoberfläche läuft, welches die Schritte umfaßt, daß (i) ein Radparameter (*S*_{*act*}) gemessen wird, der das Einsetzen einer Radblockierung anzeigt; (ii) bestimmt wird, daß das Rad im Begriff ist zu blockieren, wenn der gemessene Parameter einen Parameterschwellenpegel (*S*_{*Schwelle*}) übersteigt; (iii) der Bremsdruck reduziert wird, um das Einsetzen einer Radblockierung zu unterdrücken, wodurch eine Radregenerierung zugelassen wird; (iv) nach einer Radregenerierung ein Bremsdruck wieder aufgebaut bzw. angelegt wird, bis der gemessene Parameter den Parameterschwellenpegel wieder übersteigt; die Schritte (i) bis (iv) zyklisch wiederholt werden; die Frequenz (*F*_{*act*}) gemessen wird, bei der die Schritte (i) bis (iv) wiederholt werden; bestimmt wird, ob die gemessene Frequenz oberhalb einer Frequenzschwelle (*F*_{*Schwelle*}) liegt; und der Parameterschwellenpegel während der Periode progressiv erhöht wird, wenn die gemessene Frequenz die Frequenzschwelle übersteigt.

2. Ein Verfahren nach Anspruch 1, worin der Schritt, bei dem der Parameterschwellenpegel erhöht wird, den Schritt einschließt, daß der Parameterschwellenpegel progressiv erhöht wird, bis er auf einen Pegel erhöht worden ist, bei dem die gemessene Frequenz die Frequenzschwelle nicht mehr übersteigt.

3. Ein Verfahren nach Anspruch 1 oder 2, worin sich der gemessene Parameter auf einen Schlupf zwischen dem Rad und der Straßenoberfläche bezieht, wobei der Parameterschwellenpegel ein Schlupfschwellenpegel ist.

4. Ein Verfahren nach irgendeinem vorhergehenden Anspruch, worin der Schritt, bei dem ein Bremsdruck wieder angelegt wird, den Schritt enthält, daß der Bremsdruck bei einer vorbestimmten Rate einer Zunahme erhöht wird, bis der gemessene Parameter den Parameterschwellenpegel übersteigt.

5. Ein Verfahren nach Anspruch 4, das den Schritt enthält, daß die Rate einer Bremsdruckzunahme von der vorbestimmten Rate erhöht wird, wenn die gemessene Frequenz die Frequenzschwelle übersteigt.

6. Ein Verfahren nach Anspruch 5, das den Schritt enthält, daß die Rate einer Bremsdruckzunahme auf die vorbestimmte Rate zurückgesetzt wird, wenn die gemessene Frequenz die Frequenzschwelle nicht mehr übersteigt.

7. Ein Verfahren zum Begrenzen des Bremsdruckes, der an die Bremse eines Fahrzeugrades angelegt wird, während es über eine Straßenoberfläche läuft, das die Schritte umfaßt, daß die Zeit (*t*_{*Anlegen*}) gemessen wird, während der ein Bremsdruck an das Rad während der jüngsten Druckanlege-Operation angelegt wird; ein Radparameter (*S*_{*act*}) gemessen wird, der das Einsetzen einer Radblockierung anzeigt; bestimmt wird, daß das Rad im Begriff ist zu blockieren, wenn der gemessene Parameter einen Parameterschwellenpegel (*S*_{*Schwelle*}) übersteigt; der Parameterschwellenpegel von einem Anfangspegel während der Periode progressiv erhöht wird, wenn der gemessene Parameter den Parameterschwellenpegel übersteigt und die gemessene Bremsbetätigungszeit (*t*_{*Anlegen*}) kürzer als eine Schwellenzeit (*t*_{*Schwelle*}) ist; ein Bremsdruck angelegt wird, wenn der gemessene Parameter geringer als der Parameterschwellenpegel ist oder wenn der gemessene Parameter den Parameterschwellenpegel übersteigt, während die gemessene Zeit kürzer als die Schwellenzeit ist; und der Bremsdruck gelöst bzw. abgebaut wird, um das Einsetzen einer Radblockierung zu unterdrücken, wenn der gemessene Parameter den Parameterschwellenpegel übersteigt und die gemessene Zeit länger als die Schwellenzeit ist.

8. Ein Verfahren nach Anspruch 7, das den Schritt enthält, daß der Parameterschwellenpegel auf einen Anfangspegel zurückgesetzt wird, wenn der gemessene Parameter größer als der Parameterschwellenpegel ist.

9. Ein Verfahren nach Anspruch 7 oder 8, worin der Schritt, bei dem ein Bremsdruck angelegt wird, den Schritt enthält, daß der Bremsdruck bei einer vorbestimmten Rate einer Zunahme erhöht wird, bis der gemessene Parameter den Parameterschwellenpegel übersteigt.

10. Ein Verfahren nach Anspruch 9, das den Schritt enthält, daß die Rate einer Bremsdruckzunahme von einer vorbestimmten Rate erhöht wird, wenn der gemessene Parameter geringer als der Parameterschwellenpegel ist und die gemessene Zeit kürzer als die Schwellenzeit ist.

11. Ein Verfahren nach Anspruch 10, das den Schritt enthält, daß die Rate einer Bremsdruckzunahme auf die vorbestimmte Rate zurückgesetzt wird, wenn der gemessene Parameter den Parameterschwellenpegel übersteigt oder die gemessene Zeit länger als die Schwellenzeit ist.

12. Ein Verfahren nach irgendeinem der Ansprüche 7 bis 11, worin sich der gemessene Parameter (*S*_{*act*}) auf einen Schlupf zwischen dem Rad und der Straßenoberfläche bezieht, wobei der Parameterschwellenpegel ein Schlupfschwellenpegel ist.

13. Bremsdruckbegrenzungsgerät zum Begrenzen des Bremsdruckes, der an die Bremse eines Fahrzeugrades angelegt wird, während es über eine Straßenoberfläche läuft, mit Meßmittel (10) zum Messen eines Radparameters (*S*_{*act*}), der das Einsetzen einer Radblockierung anzeigt; Verarbeitungsmittel (10), welches bestimmen kann, daß das Rad im Begriff ist zu blockieren, wenn der gemessene Parameter einen Parameterschwellenpegel (*S*_{*Schwelle*}) übersteigt; und Stellgliedmittel (24), das auf das Verarbeitungsmittel anspricht und den Bremsdruck reduzieren kann, um das Einsetzen einer Radblockierung zu unterdrücken, wodurch eine Radregenerierung zugelassen wird, einen Bremsdruck nach einer Radregenerierung wieder aufbauen bzw. anlegen kann, bis der gemessene Parameter den Parameterschwellenpegel wieder übersteigt; wobei das Meßmittel, das Verarbeitungsmittel und das Stellgliedmittel zyklisch arbeiten können; wobei das Verarbeitungsmittel die Frequenz (*F*_{*act*}) der Zyklen messen kann, um zu bestimmen, ob die gemessene Frequenz oberhalb einer Frequenzschwelle (*F*_{*Schwelle*}) liegt, und um den Parameterschwellenpegel während der Periode progressiv zu erhöhen, wenn die gemessene Frequenz die Frequenzschwelle übersteigt.

14. Bremsdruckbegrenzungsgerät zum Begrenzen des Bremsdruckes, der an die Bremse eines Fahrzeugrades angelegt wird, während es über eine Straßenoberfläche läuft, mit Meßmittel (10) zum Messen der Zeit (*t*_{*Anlegen*}), während der ein Bremsdruck an das Rad während der jüngsten Druckanlege-Operation angelegt wird, und zum Messen eines Radparameters (*S*_{*act*}), der das Einsetzen einer Radblockierung anzeigt; Verarbeitungsmittel (10), um zu bestimmen, daß das Rad im Begriff ist zu blockieren, wenn der gemessene Parameter einen Parameterschwellenpegel (*S*_{*Schwelle*}) übersteigt, und welches den Parameterschwellenpegel von einem Anfangspegel während der Periode progressiv erhöhen kann, wenn der gemessene Parameter den Parameterschwellenpegel übersteigt und die gemessene Bremsbetätigungszeit (*t*_{*Anlegen*}) kürzer als eine Schwellenzeit (*t*_{*Schwelle*}) ist; und Stellgliedmittel (24), das einen Bremsdruck anlegen kann, wenn der gemessene Parameter geringer als der Parameterschwellenpegel ist oder wenn der gemessene Parameter den Parameterschwellenpegel übersteigt, während die gemessene Zeit kürzer als die Schwellenzeit ist, und den Bremsdruck lösen bzw. abbauen kann, um das Einsetzen einer Radblockierung zu unterdrücken, wenn der gemessene Parameter den Parameterschwellenpegel übersteigt und die gemessene Zeit länger als die Schwellenzeit ist.

## Revendications

1. Procédé de limitation de la pression de freinage appliquée au frein d'une roue d'un véhicule qui se déplace sur la surface d'une route, comprenant les stades suivants : (i) on mesure un paramètre de roue (S_{act}) indicatif de l'apparition d'un blocage de la roue; (ii) on détermine que la roue est sur le point de se bloquer lorsque le paramètre mesuré dépasse un niveau de seuil paramétrique (Sₛₑᵤᵢₗ); (iii) on réduit la pression de freinage pour supprimer l'apparition du blocage de la roue, en permettant ainsi une récupération de la roue; (iv) on réapplique une pression de freinage après la récupération de la roue jusqu'à ce que le paramètre mesuré dépasse à nouveau le niveau de seuil paramétrique; on répète les stades (i) à (iv) de manière cyclique; on mesure la fréquence (F_{act}) à laquelle les stades (i) à (iv) sont répétés; on détermine si la fréquence mesurée se situe au-dessus d'un seuil de fréquence (Fₛₑᵤᵢₗ); et on augmente progressivement le niveau de seuil paramétrique pendant la période pendant laquelle la fréquence mesurée dépasse le seuil de fréquence.

2. Procédé selon la revendication 1, dans lequel le stade d'augmentation du niveau de seuil paramétrique comprend le stade d'augmentation progressive du niveau de seuil paramétrique jusqu'à ce qu'il ait été augmenté à un niveau où la fréquence mesurée ne dépasse plus le seuil de fréquence.

3. Procédé selon la revendication 1 ou 2, dans lequel le paramètre mesuré est apparenté au patinage entre la roue et la surface de la route, le niveau de seuil paramétrique étant un niveau de seuil de patinage.

4. Procédé selon l'une quelconque des revendications précédentes, dans lequel le stade de réapplication de la pression de freinage comprend le stade d'augmentation de la pression de freinage à une vitesse prédéterminée d'augmentation jusqu'à ce que le paramètre mesuré dépasse le niveau de seuil paramétrique.

5. Procédé selon la revendication 4, comprenant le stade d'augmentation de la vitesse d'augmentation de la pression de freinage à partir de la vitesse prédéterminée lorsque la fréquence mesurée dépasse le seuil de fréquence.

6. Procédé selon la revendication 5, comprenant le stade de remise de la vitesse d'augmentation de la pression de freinage à la vitesse prédéterminée lorsque la fréquence mesurée ne dépasse plus le seuil de fréquence.

7. Procédé de limitation de la pression de freinage appliquée au frein d'une roue d'un véhicule qui se déplace sur la surface d'une route, comprenant les stades suivants : on mesure la période (t_{application}) au cours de laquelle la pression de freinage est appliquée à la roue au cours de l'opération d'application de pression la plus récente; on mesure un paramètre de roue (S_{act}) indicatif de l'apparition d'un blocage de roue; on détermine que la roue est sur le point de se bloquer lorsque le paramètre mesuré dépasse un niveau de seuil paramétrique (Sₛₑᵤᵢₗ); on augmente le niveau du seuil paramétrique progressivement d'un niveau initial au cours de la période où le paramètre mesuré dépasse le niveau de seuil paramétrique et où la période d'application du frein mesurée (t_{application}) est inférieure à un temps de seuil (tₛₑᵤᵢₗ); on applique un pression de freinage lorsque le paramètre mesuré est inférieur au niveau de seuil paramétrique ou lorsque le paramètre mesuré dépasse le niveau de seuil paramétrique, tandis que le temps mesure est inférieur au temps de seuil; et on libère la pression de freinage pour supprimer l'apparition d'un blocage de la roue lorsque le paramètre mesuré dépasse le niveau de seuil paramétrique et que le temps mesuré est supérieur au temps de seuil.

8. Procédé selon la revendication 7, comprenant le stade qui consiste à remettre le niveau de seuil paramétrique à un niveau initial lorsque le paramètre mesuré est supérieur au niveau de seuil paramétrique.

9. Procédé selon la revendication 7 ou 8, dans lequel le stade d'application de la pression de freinage comprend le stade d'augmentation de la pression de freinage à une vitesse d'augmentation prédéterminée jusqu'à ce que le paramètre mesuré dépasse le niveau de seuil paramétrique.

10. Procédé selon la revendication 9, comprenant le stade d'augmentation de la vitesse d'augmentation de la pression de freinage à partir d'une vitesse prédéterminée lorsque le paramètre mesuré est inférieur au niveau de seuil paramétrique et que le temps mesuré est inférieur au temps de seuil.

11. Procédé selon la revendication 10, comprenant le stade de remise de la vitesse d'augmentation de la pression de freinage à la vitesse prédéterminée lorsque le paramètre mesuré dépasse le niveau de seuil paramétrique ou que le temps mesuré est supérieur au temps de seuil.

12. Procédé selon l'une quelconque des revendications 7 à 11, dans lequel le paramètre mesuré (S_{act}) est apparenté au patinage entre la roue et la surface de la route, le niveau de seuil paramétrique étant un niveau de seuil de patinage.

13. Appareil limitateur de pression de freinage pour limiter la pression de freinage appliquée au frein d'une roue d'un véhicule qui se déplace à la surface d'une route, comprenant des moyens de mesure (10) pour mesurer un paramètre de roue (S_{act}) indicatif de l'apparition d'un blocage de la roue, des moyens de traitement (10) susceptibles de déterminer que la roue est sur le point de se bloquer lorsque le paramètre mesuré dépasse un niveau de seuil paramétrique (Sₛₑᵤᵢₗ), et des moyens de commande (24) sensibles aux moyens de traitement et susceptibles de réduire la pression de freinage pour supprimer l'apparition d'un blocage de la roue, ce qui permet une récupération de la roue, de réappliquer une pression de freinage après récupération de la roue jusqu'à ce que le paramètre mesuré redépasse le niveau de seuil paramétrique, les moyens de mesure, les moyens de traitement et les moyens de commande étant à même d'opérer de manière cyclique, les moyens de traitement étant susceptibles de mesurer la fréquence (F_{act}) des cycles, de déterminer si la fréquence mesurée est supérieure à un seuil de fréquence (Fₛₑᵤᵢₗ) et d'augmenter progressivement le niveau de seuil paramétrique au cours de la période où la fréquence mesurée dépasse le seuil de fréquence.

14. Appareil limitateur de pression de freinage pour limiter la pression de freinage appliquée au frein d'une roue d'un véhicule qui se déplace à la surface d'une route, comprenant des moyens de mesure (10) pour mesurer la période (t_{application}) au cours de laquelle la pression de freinage est appliquée à la roue au cours de l'opération d'application de pression la plus récente et pour mesurer un paramètre de roue (S_{act}) indicatif de l'apparition d'un blocage de la roue, des moyens de traitement (10) pour déterminer que la roue est sur le point de se bloquer lorsque le paramètre mesuré dépasse un niveau de seuil paramétrique (Sₛₑᵤᵢₗ) et susceptibles d'augmenter le niveau de seuil paramétrique progressivement d'un niveau initial au cours de la période pendant laquelle le paramètre mesuré dépasse le niveau de seuil paramétrique et où le temps d'application mesuré du frein (t_{application}) est inférieur à un temps de seuil (tₛₑᵤᵢₗ), et des moyens de commande (24) qui sont susceptibles d'appliquer une pression de freinage lorsque le paramètre mesuré est inférieur au niveau de seuil paramétrique ou lorsque le paramètre mesuré dépasse le niveau de seuil paramétrique, tandis que le temps mesuré est inférieur au temps de seuil, et pour libérer la pression de freinage pour supprimer l'apparition d'un blocage de la roue lorsque le paramètre mesuré dépasse le niveau de seuil paramétrique et que le temps mesuré est supérieur au temps de seuil.
